(19) Europäisches Patentamt / European Patent Office / Office européen des brevets

(11) **EP 4 004 514 B1**

(12) **EUROPÄISCHE PATENTSCHRIFT**

(45) Veröffentlichungstag und Bekanntmachung des Hinweises auf die Patenterteilung:
**26.03.2025 Patentblatt 2025/13**

(21) Anmeldenummer: **20758098.6**

(22) Anmeldetag: **24.07.2020**

(51) Internationale Patentklassifikation (IPC):
**G01M 1/24** *(2006.01)* **G01M 1/22** *(2006.01)*

(52) Gemeinsame Patentklassifikation (CPC):
**G01M 1/24; G01M 1/22**

(86) Internationale Anmeldenummer:
**PCT/AT2020/060278**

(87) Internationale Veröffentlichungsnummer:
**WO 2021/011982 (28.01.2021 Gazette 2021/04)**

(54) **ANTRIEBSSTRANGPRÜFSTAND ZUR DETEKTION EINER UNWUCHT UND/ODER EINER FEHLAUSRICHTUNG**

DRIVETRAIN TEST BENCH FOR DETECTING AN IMBALANCE AND/OR A MISALIGNMENT

BANC D'ESSAI DE CHAÎNE CINÉMATIQUE SERVANT À DÉTECTER UN DÉSÉQUILIBRE ET/OU UNE ERREUR D'ALIGNEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.07.2019 AT 506742019**
**12.09.2019 AT 507972019**
**20.09.2019 AT 508132019**

(43) Veröffentlichungstag der Anmeldung:
**01.06.2022 Patentblatt 2022/22**

(73) Patentinhaber: **AVL List GmbH**
**8020 Graz (AT)**

(72) Erfinder:
• **SCHMIDT, Martin**
**63225 Langen (DE)**
• **QUURCK, Lukas**
**64287 Darmstadt (DE)**
• **MODER, Jakob**
**8800 Unzmarkt (AT)**

(74) Vertreter: **Hahner, Ralph**
**Wallinger Ricker Schlotter Tostmann**
**Patent- und Rechtsanwälte Partnerschaft mbB**
**Zweibrückenstraße 5-7**
**80331 München (DE)**

(56) Entgegenhaltungen:
FR-A1- 2 918 453     US-A1- 2019 195 733
US-A1- 2019 212 217     US-B1- 7 066 025

**Beschreibung**

Die Erfindung betrifft ein Verfahren zur Detektion einer Unwucht und/oder einer Fehlausrichtung wenigstens eines Wellenstrangs eines Antriebsstrangs im Betrieb auf einem Prüfstand. Des Weiteren betrifft die Erfindung einen Prüfstand, auf welchem das Verfahren ausgeführt werden kann.

Unwuchten entstehen bei einem rotierenden Körper, dessen Rotationsachse nicht einer seiner Hauptträgheitsachsen entspricht. Unwuchten führen zu Vibrationen und erhöhtem Verschleiß oder gar zu schweren Maschinenschäden (z.B. Wellenbruch). Daher wird ein rotierender Körper im Allgemeinen durch Platzieren einer Ausgleichsmasse ausgewuchtet.

Zu unterscheiden ist hierbei zwischen einer statischen Unwucht und einer dynamischen Unwucht, auch Momenten-Unwucht genannt. Bei der statischen Unwucht ist die Hauptträgheitsachse des rotierenden Körpers parallel zur Rotationsachse verschoben. Mit anderen Worten verläuft die Drehachse nicht durch den Schwerpunkt des Rotationskörpers. Bei Rotationen bewirkt diese Unwucht eine Fliehkraft senkrecht zur Drehachse. In der Regel kann eine solche Unwucht durch Auswuchten in einer Ebene beseitigt werden, wobei die Lage der Auswuchtebene beliebig ist. Zur Kompensation der statischen Unwucht müssen in wenigstens einer Auswuchtebene Ausgleichsmassen gesetzt werden.

Bei der rein dynamischen Unwucht liegt der Schwerpunkt des rotierenden Körpers zwar auf der Drehachse. Allerdings ist die Hauptträgheitsachse des rotierenden Körpers zur Rotationsachse verkippt. Hierdurch entsteht bei Rotation ein Unwuchtmoment, welches in den Lagerstellen der Auflagerkraft mit der ersten harmonischen Ordnung der Drehfrequenz des Rotationskörpers auftritt. Zur Kompensation der dynamischen Unwucht müssen Ausgleichsmassen in wenigstens zwei unterschiedlichen Auswuchtebenen gesetzt werden. Die Auswuchtebenen sind hierbei jeweils senkrecht zur Drehachse des Rotationskörpers.

Fehlausrichtungen entstehen durch Montage- und Fertigungsunsicherheiten, Setzungserscheinungen und thermische Dehnung, welche zu Verlagerungen eines rotierenden Körpers führen. Solche Verlagerungen wirken sich schädlich auf die Funktion und Lebensdauer der Rotationskörper aus. Fehlausrichtungen führen zu Verspannungskräften, insbesondere Biegemomenten und Druckkräften, auf den Rotationskörper und seine Lagerung. Fehlausrichtungen infolge von thermischer Dehnung, welche im Betrieb auftreten, können mittels der Erfindung im Betrieb festgestellt werden. Bekannte Methoden zur Messung von Fehlausrichtungen werden in der Regel nicht im Betrieb eingesetzt und erfassen daher die dynamischen thermischen Betriebsbedingungen nicht.

Verfahren zum statischen und dynamischen Wuchten sind aus dem Lehrbuch "Rotordynamik", Gasch / Nordmann / Pfützner, Springer Verlag, 2. Auflage, 1975 und dem Lehrbuch "Auswuchttechnik Band 1: Allgemeine Grundlagen, Meßverfahren und Richtlinien" Springer 1977 bekannt. Die Veröffentlichung FR 2 918 453 A1 beschäftigt sich mit dem Wuchten von Wellen. Eine Welle ist zwischen ersten und zweiten Antriebsschäften angeordnet. Die Antriebsschäfte werden von Strukturen gestützt, die über piezoelektrische Sensoren an Basen eines Prüfstands befestigt sind. Signale der piezoelektrischen Sensoren werden an Mittel zum Wuchten übertragen.

Es ist die Aufgabe der Erfindung, ein Verfahren zur Detektion und/oder Korrektur einer Unwucht und/oder einer Fehlausrichtung eines Wellenstrangs eines Antriebsstrangprüfstandsbetriebs sowie einen entsprechenden Antriebsstrangprüfstand bereitzustellen.

Diese Aufgabe wird durch den unabhängigen Anspruch gelöst. Vorteilhafte Ausgestaltungen werden in den Unteransprüchen beansprucht.

Ein erster Aspekt der Erfindung betrifft ein Verfahren zur Detektion einer Unwucht und/oder einer Fehlausrichtung wenigstens eines Wellenstrangs eines Antriebsstrangs im Betrieb auf einem Prüfstand, wobei ein erster piezoelektrischer Kraftsensor in einem Kraftfluss angeordnet ist, welcher durch eine Leistungsübertragung zwischen einer Belastungsmaschine des Prüfstands und einer Antriebsmaschine des Antriebsstrangs oder des Prüfstands verursacht wird und welcher mittels des Wellenstrangs übertragen wird. Vorzugsweise wird mittels des ersten Kraftsensors eine erste Kraftmessung in einer ersten Ebene und/oder normal zu der ersten Ebene, welche von einer Drehachse des Wellenstrangs geschnitten wird und vorzugsweise wenigstens im Wesentlichen normal zu der Drehachse ist, durchgeführt. Weiter vorzugsweise werden wenigstens ein Messwertverlauf der ersten Kraftmessung und ein dem Messwertverlauf zugeordneter Wertverlauf einer Drehwinkelbestimmung für den Wellenstrang zur Detektion einer Unwucht analysiert. Alternativ oder zusätzlich wird der Messwertverlauf der ersten Kraftmessung zur Detektion einer Fehlausrichtung des Wellenstrangs analysiert.

Ein zweiter Aspekt der Erfindung betrifft Antriebsstrangprüfstand mit einer Belastungsmaschine, welche mit einem zu testenden Antriebsstrang verbindbar ist, und einem ersten piezoelektrischer Kraftsensor, welcher in einem Kraftfluss in Bezug auf den zu testenden Antriebsstrang angeordnet ist und eingerichtet ist, um eine erste Kraftmessung in einer ersten Ebene und/oder normal zu der ersten Ebene, welche von einer Drehachse eines Wellenstrangs des Antriebsstrangs geschnitten wird und vorzugsweise wenigstens im Wesentlichen normal zu der Drehachse ist, im Prüfstandsbetrieb durchzuführen. Vorzugsweise weist der Antriebsstrangprüfstand auch einen Inkrementalgeber auf, eingerichtet, um einen Drehwinkel für den Wellenstrang zu bestimmen, sowie weiter vorzugsweise eine eine Signalverarbeitungseinrichtung mit Mitteln zum Detektieren einer Unwucht des Wellenstrangs auf der Grundlage eines Messwertverlaufs der ersten Kraftmessung und einem dem Messwertverlauf zugeordneten Wertverlauf einer Drehwinkelbestimmung für den Wellenstrang und/oder Mitteln zum Detektieren einer Fehlausrichtung des Wellenstrangs auf der Grundlage des Messwertverlaufs der ersten Kraftmessung.

Weitere Aspekte der Erfindung betreffen ein Computerprogramm und ein Computer-lesbares Medium.

Ein Wellenstrang im Sinne der Erfindung weist eine oder mehrere, drehverbundene Wellen auf.

"Verbindbar" im Sinne der Erfindung heißt vorzugsweise, "kann verbunden werden" oder "verbunden sein".

Ein Kraftfluss im Sinne der Erfindung ist vorzugsweise ein Weg einer Kraft und/oder eines Drehmoments in einem mechanischen System von einem Angriffspunkt, insbesondere einer Stelle der Einleitung, bis zu einer Stelle oder mehreren Stellen, an der oder denen die Kraft und/oder das Drehmoment durch eine Reaktionskraft und/oder ein Reaktionsmoment aufgenommen werden. Vorzugsweise setzt sich der Kraftfluss aus einer Kraft, insbesondere einer Querkraft zur Drehrichtung der Welle, und einem Drehmoment, insbesondere um die Drehachse, zusammen.

Ein Leistungsfluss im Sinne der Erfindung ist vorzugsweise ein Weg einer Übertragung von Leistung in einem mechanischen System von einer Stelle der Einleitung bis zu einer Stelle oder mehreren Stellen, an welchen die Leistung abgenommen wird.

Ein piezoelektrisches Messelement im Sinne der Erfindung weist vorzugsweise einen Piezokristall sowie eine Ladungsableitung bzw. eine elektrische Verschaltung auf.

Eine Maschine im Sinne der Erfindung ist eingerichtet zum Umwandeln von Energie, vorzugsweise einer kinetischen Energie, insbesondere einer Rotation, in elektrische Energie oder umgekehrt oder von chemischer Energie in eine kinetische Energie. Eine Maschine im Sinne der Erfindung weist vorzugsweise ein Gehäuse auf.

Eine Abstützvorrichtung im Sinne der Erfindung ist vorzugsweise eine Vorrichtung zum Abstützen eines Elements gegenüber einer auf dieses Element wirkenden Kraft und/oder eines auf dieses Element wirkenden Drehmoments. Eine Abstützvorrichtung ist vorzugsweise dazu eingerichtet, eine sogenannte Reaktionskraft bzw. Lagerreaktionskraft bereitzustellen. Eine Abstützvorrichtung im Sinne der Erfindung dient vorzugsweise zum Abstützen der Lagervorrichtung. Vorzugsweise ist die Abstützvorrichtung eine Getriebeglocke, ein Gehäuse des Antriebsstrangs oder auch eine Bodenplatte.

Detektieren im Sinne der Erfindung ist vorzugsweise ein Feststellen und/oder ein Quantifizieren und/oder ein Lokalisieren und/oder ein Analysieren.

Ein Mittel im Sinne der Erfindung kann hard- und/oder softwaretechnisch ausgebildet sein, insbesondere eine, vorzugsweise mit einem Speicher- und/oder Bussystem daten- bzw. signalverbundene, insbesondere digitale, Verarbeitungs-, insbesondere MikroprozessorEinheit (CPU), und/oder ein oder mehrere Programme oder Programm-Module aufweisen. Die CPU kann dazu ausgebildet sein, Befehle, die als ein in einem Speichersystem abgelegtes Programm implementiert sind, abzuarbeiten, Eingangssignale von einem Datenbus zu erfassen und/oder Ausgangssignale an einen Datenbus zu geben. Ein Speichersystem kann ein oder mehrere, insbesondere verschiedene, Speichermedien, insbesondere optische, magnetische, Festkörper- und/oder andere nicht-flüchtige Medien aufweisen. Das Programm kann derart beschaffen sein, dass es die hier beschriebenen Verfahren verkörpert bzw. auszuführen imstande ist, dass die CPU die Schritte solcher Verfahren ausführen kann und damit insbesondere eine Unwucht und/oder eine Fehlausrichtung detektieren kann.

Ein Inkrementalgeber im Sinne der Erfindung kann vorzugsweise einzelne Winkelsegmente und/oder ganze Umdrehungen feststellen. Insbesondere gibt der Inkrementalgeber wenigstens einen Puls pro Umdrehung.

Unter Wuchten wird im Sinne der vorliegenden Erfindung ein Anpassen der Masse des Wellenstrangs bzw. des Antriebsstrangs verstanden. Dies kann beispielsweise auch eine Veränderung der Massenverteilung bedeuten, indem beispielsweise eine Schraube weiter hinein oder hinaus gedreht wird

Die Erfindung beruht insbesondere auf dem Ansatz, einen Wellenstrang eines auf einem Prüfstand zu testenden Antriebsstrangs auf einem Prüfstand im Prüfstandsbetrieb zu wuchten und auszurichten. Insbesondere muss ein Wellenstrang dann nicht gesondert extern, d.h. nicht auf dem Prüfstand, oder durch weitere Messverfahren im Stillstand oder in einem Wucht- bzw. Ausrichtbetrieb gewuchtet oder ausgerichtet werden. Die Detektion der Unwucht und/oder der Fehlausrichtung erfolgt vielmehr in einem Kraftfluss, welcher unmittelbar durch den Prüfstandsbetrieb, bei welchem eine Leistungsübertragung zwischen einer Belastungsmaschine des Prüfstands, eines sogenannten Dyno, und einer Antriebsmaschine verursacht wird. Für die zum Wuchten nötigen Kraftmessungen werden erfindungsgemäß piezoelektrische Messelemente eingesetzt, welche eine besonders zuverlässige Messung erlauben und aufgrund ihrer Steifheit nur geringfügige Elastizitäten zu dem schwingungsfähigen System des Antriebsstrangs hinzufügen. Überdies ermöglichen die Piezoelemente, im Unterschied zu Beschleunigungssensoren, die durch eine Unwucht verursachten Kräfte und Momente unmittelbar zu messen und nicht erst über den Umweg der Beschleunigung von Massen indirekt berechnen zu müssen.

Durch die Erfindung kann ein Wellenstrang im zusammengebauten Zustand, mit allen Montageunsicherheiten, wie ungleichen Schraubengewichten, Ausrichtfehlern, Passungsspielen und Fertigungsfehlern, wie Exzentrizität, Asymmetrie, Dichtefehler, etc., auch ohne Vorwuchten einzelner Elemente des Antriebsstrangs gewuchtet werden. Das Verfahren kann hierbei dauerhaft zur Überwachung des Wellenstrangs eingesetzt werden und erfordert insbesondere keine zusätzliche, dem Prüfstand nicht zugehörige Messinstrumentation und kann somit im Betrieb ohne Unterbrechung von Prüfläufen durchgeführt werden.

Durch die direkte Kraftmessung werden keine gesonderten Messläufe zur Bestimmung der Urunwucht und der Einflusskoeffizienten durch einen Testmassen-Unwuchtlauf benötigt.

Auch wird keine gesonderte Hardware zur Messdatenerfassung, wie beispielsweise Beschleunigungsaufnehmer, benötigt. Die piezoelektrischen Kraftsensoren sind vorzugsweise fest im Aufbau des Prüfstands verbaut, wodurch das Messsignal physikalisch unverfälscht erfasst werden kann.

Da unmittelbar die physikalische Größe "Kraft" erfasst wird, kann ein Rückschluss auf die Schädigungswirkung auf mechanische Komponenten gezogen werden. Ein empirischer Ansatz zur Beurteilung von Schwingungsgeschwindigkeiten und einer normativ festgelegten Wuchtgüteklasse in Bezug auf den Zustand von Maschinen ist prinzipiell nicht notwendig. Auf der Grundlage der erfindungsgemäßen Bestimmung von Unwuchten und Ausrichtungsfehlern könnten daher neue Normen zur Maschinensicherheit erarbeitet werden.

Verändert sich der Unwuchtzustand des Wellenstrangs im Betrieb, kann dies unter Einsatz der Erfindung bereits im Prüfstandsbetrieb detektiert werden, und es können Gegenmaßnahmen, beispielsweise mittels Wuchtaktoren oder ein Nothalt bzw. eine Lastreduktion, eingeleitet werden, um eine dauerhafte Schädigung des Antriebsstrangs oder des Prüfstands zu vermeiden.

Während die durch die Unwucht verursachten Kräfte und Momente mit der Drehzahl des Antriebsstrangs umlaufen, treten bei der Fehlausrichtung zusätzlich zu den Gravitationskräften weitere raumfeste, das heißt nicht mit der Drehzahl umlaufende, Drehmomente auf. Durch die Erfindung können Fehlausrichtungen ohne zusätzliche Schwingungsanalysen festgestellt werden.

Vorzugsweise wird auf der Basis der Detektion der Unwucht und/oder Fehlausrichtung ein Wuchten des Wellenstrang bzw. Antriebsstrangs durchgeführt, um die detektierte Unwucht bzw. Fehlausrichtung zu verringern oder zu entfernen.

Das Anpassen der Masse erfolgt insbesondere in Form von Abtragen oder Hinzufügen einer, insbesondere vorbestimmten, Masse, welche insbesondere auf der Detektion der Unwucht und/oder Fehlausrichtung bestimmt wird, an einer, insbesondere vorbestimmten, Position des Wellenstrangs bzw. Antriebsstrangs, welche insbesondere auf der Detektion der Unwucht und/oder Fehlausrichtung bestimmt wird. Insbesondere weist der Wellenstrang oder der Antriebsstrang wenigstens ein Element auf, welches vorzugsweise gezielt eingebracht ist, von welchem Material bzw. Masse abgetragen werden kann. Das Abtragen von Material zum Ausgleichen einer Unwucht wird auch als negatives Wuchten bezeichnet. Das Abtragen kann insbesondere durch Fräsen, Bohren, Laser und dergleichen erfolgen.

In einer vorteilhaften Ausgestaltung des Verfahrens wird der Messwertverlauf der ersten Kraftmessung zur Detektion einer Unwucht in Bezug auf die Drehachse und/oder einen Schwerpunkt des Wellenstrangs analysiert. Wird eine Analyse der Kraftmessung in Bezug auf die Drehachse ausgeführt, so kann eine statische Unwucht festgestellt werden. Wird eine Analyse in Bezug auf die Schwereachse (auch Hauptträgheitsachse genannt) des Wellenstrangs ausgeführt, so kann eine rein dynamische Unwucht festgestellt werden. Vorzugsweise können auch beide Analysen gleichzeitig ausgeführt werden.

In einer weiteren vorteilhaften Ausgestaltung des Verfahrens wird mittels eines zweiten piezoelektrischen Kraftsensors in dem Kraftfluss eine zweite Kraftmessung in einer zweiten Ebene, welche von der ersten Ebene verschieden ist, aber ebenfalls von der Drehachse eines Wellenstrangs des Antriebsstrangs geschnitten wird und vorzugsweise wenigstens im Wesentlichen senkrecht zu der Drehachse ist, durchgeführt, wobei eine Unwucht des Wellenstrangs in Bezug auf dessen Schwereachse bzw. Hauptträgheitsachse auf der Grundlage eines Messwertverlaufs der zweiten Kraftmessung bestimmt wird.

Wie bereits eingangs erläutert, verursacht eine dynamische Unwucht ein Kippmoment um den Schwerpunkt eines Wellenstrangs. Dieses Kippmoment kann dadurch detektiert werden, indem eine Kraftmessung an einem Punkt im Kraftfluss parallel zur Drehachse mittels eines Mehrkomponenten-Kraftsensors ausgeführt wird. Die Messung erfolgt mithin in einer ersten Ebene, welche von der Drehachse eines Wellenstrangs des Antriebsstrangs geschnitten wird. Darüber hinaus gibt es die Möglichkeit, das Kippmoment zu bestimmen, indem die erste Kraftmessung in einer ersten Ebene durchgeführt wird und eine zweite Kraftmessung in einer zweiten Ebene durchgeführt wird, das heißt eine Messung von Kräften, welche in der zweiten Ebene liegen. Die beiden Ebenen sind hierbei voneinander verschieden, aber werden wenigstens von der Drehachse des Wellenstrangs geschnitten und sind vorzugsweise wenigstens im Wesentlichen senkrecht zu der Drehachse.

In einer weiteren vorteilhaften Ausgestaltung des Verfahrens ist der erste und/oder der zweite piezoelektrische Kraftsensor ein Mehrkomponenten-Kraftsensor mit mehreren piezoelektrischen Messelementen. Durch den Einsatz eines Mehrkomponenten-Kraftsensors können beispielsweise Biegemomente in dem Wellenstrang bestimmt werden. Darüber hinaus können mehrere Piezoelemente dazu benutzt werden, um beispielsweise die Antriebsmaschine zu lagern. Hierfür können beispielsweise drei Piezoelemente in drei Lagerpunkten auf einer Abstützvorrichtung der Belastungsmaschine oder der Antriebsmaschine angeordnet werden.

In einer weiteren vorteilhaften Ausgestaltung des Verfahrens werden Kraftkomponenten und Drehmomentkomponenten mittels eines Gleichungssystems auf der Grundlage von Messsignalen der piezoelektrischen Messelemente bestimmt. Vorzugsweise werden Messsignale der einzelnen piezoelektrischen Messelemente in Anteile, welche zu den jeweiligen abzuleitenden Kraftkomponenten und/oder Drehkomponenten beitragen, zerlegt. Weiter vorzugsweise werden, insbesondere alle, Beiträge der einzelnen piezoelektrischen Messelemente zu den jeweiligen zu bestimmenden Kraftkomponenten und/oder Drehkomponenten berücksichtigt.

Durch den Einsatz eines Gleichungssystems, welches nach den jeweils zu bestimmenden Kraftkomponenten und/oder Drehkomponenten aufgelöst wird, können Messungen einer Vielzahl von piezoelektrischen Messelementen berücksichtigt werden. Darüber hinaus können alle Messungen eines Mehrkomponenten-Kraftsensors bzw. dessen piezoelektrischen Messelementen einen Anteil zu den zu bestimmenden Kraftkomponenten und/oder Drehmomentkomponenten beitragen. Hierdurch können insbesondere Kraftnebenschlüsse über nicht an einer Messung beteiligte Piezoelemente vermieden werden.

In einer weiteren vorteilhaften Ausgestaltung des Verfahrens wird auf der Basis der Detektion der Unwucht und/oder Fehlausrichtung eine Masse des Wellenstrangs angepasst, um die detektierte Unwucht bzw. Fehlausrichtung zu verringern oder zu entfernen. Durch die Verwendung der detektierten Unwucht bzw. Fehlaurichtung als Basis für die Bestimmung der Anpassung der Masse, kann besonders präzise bestimmt werden, an welcher Position eine definierte Masse hinzugefügt oder abgetragen werden soll, um die Unwucht bzw. Fehlausrichtung auszugleichen.

Die in Bezug auf die im ersten Aspekt der Erfindung im Weiteren beschriebenen Merkmale und Vorteile gelten für die weiteren Aspekte der Erfindung entsprechend und umgekehrt.

In einer vorteilhaften Ausgestaltung weist der Antriebsstrangprüfstand eine Abstützvorrichtung zum Abstützen der Belastungsmaschine und/oder der Antriebsmaschine auf, wobei der piezoelektrische Kraftsensor in der Weise eingerichtet und angeordnet ist, um eine Reaktionskraft zwischen der Belastungsmaschine und der Abstützvorrichtung und/oder der Antriebsmaschine und der Abstützvorrichtung zu messen.

In dieser Ausgestaltung ist der Kraftsensor zwischen der Antriebsmaschine und der Belastungsmaschine und/oder zwischen der Antriebsmaschine und der Abstützvorrichtung angeordnet. Mithin wird die Kraftmessung in diesem Ausführungsbeispiel gegenüber einem raumfesten Bezugssystem, nämlich dem Antriebsstrangprüfstand als solchen bzw. einer Grundplatte des Antriebsstrangprüfstands vorgenommen. Hierbei kann ein piezoelektrischer Kraftsensor mit nur einem Piezoelement mit Transversaleffekt, Longitudinaleffekt oder auch Schereffekt zum Einsatz kommen, je nachdem, wie die Belastungsmaschine oder die Antriebsmaschine an der Abstützvorrichtung gelagert werden. Durch diese Art der Anordnung des Kraftsensors wird eine rotierende Masse des Wellenstrangs nicht im Wesentlichen verändert.

In einer weiteren vorteilhaften Ausgestaltung des Antriebsstrangprüfstands ist der piezoelektrische Kraftsensor ein Mehrkomponenten-Kraftsensor mit mehreren piezoelektrischen Messelementen. Hierdurch lässt sich eine besonders genaue Messung mittels des Kraftsensors verwirklichen.

In einer weiteren vorteilhaften Ausgestaltung des Antriebsstrangprüfstands sind die piezoelektrischen Messelemente in der Weise ausgebildet und zwischen einem ersten Teil des Wellenstrangs und einem zweiten Teil des Wellenstrangs in der Weise angeordnet, dass mittels der piezoelektrischen Messelemente eine Kraft, insbesondere eine Scherkraft und/oder eine Druckkraft zwischen dem ersten Teil und dem zweiten Teil messbar ist. Vorzugsweise sind die Messelemente hierbei an verschiedenen Positionen um die Drehachse angeordnet. Weiter vorzugsweise sind die Messelemente in einem Flansch des Antriebsstrangprüfstands angeordnet.

Durch die Messung direkt im oder am Wellenstrang kann eine besonders einfache Messanordnung verwirklicht werden.

In einer weiteren vorteilhaften Ausgestaltung des Antriebsstrangprüfstands weist dieser Mittel zum Anpassen einer Masse des Wellenstrangs bzw. des Antriebsstrangs auf Basis der detektierten Unwucht und/oder Fehlausrichtung auf, um die detektierte Unwucht bzw. Fehlausrichtung zu verringern oder zu entfernen.

Solche Mittel können vorzugsweise Spanmaschinen, Lasermaschinen, die Masse abtragen oder auftragen, oder Fügemaschinen sein.

Erfolgt ein Anpassen der Masse des Wellenstrangs durch eine Änderung der Massenverteilung, so kann dies vorteilhaft durch eine Vorrichtung geschehen, die die Position eines beweglichen Elements des Wellenstrangs verändert oder die Form des Wellenstrangs verändert, beispielsweise verbiegt.

Somit kann die detektierte Unwucht bzw. Fehlaurichtung ausgeglichen werden, ohne dass der Wellenstrang bzw. der Antriebsstrang ausgebaut und nachbearbeitet werden muss.

Weitere Vorteile und Merkmale gehen aus der nachfolgenden Beschreibung der bevorzugten Ausführungsbeispiele in Bezug auf die Figuren hervor. Die Figuren zeigen wenigstens teilweise schematisch:

**Fig. 1**  ein erstes Ausführungsbeispiel eines Antriebsstrangprüfstands, auf welchem ein Verfahren zur Detektion einer Unwucht und/oder einer Fehlausrichtung ausführbar ist;

**Fig. 2**  ein zweites Ausführungsbeispiel eines Antriebsstrangprüfstands, auf welchem ein Verfahren zur Detektion einer Unwucht und/oder einer Fehlausrichtung ausführbar ist;

**Fig. 3** ein drittes Ausführungsbeispiel eines Antriebsstrangprüfstands, auf welchem ein Verfahren zur Detektion einer Unwucht und/oder einer Fehlausrichtung ausführbar ist;

**Fig. 4** ein Detail der Prüfstände nach den Fig. 1, 2 oder 3; und

**Fig. 5** ein Ausführungsbeispiel eines Verfahrens zur Detektion einer Unwucht und/oder einer Fehlausrichtung.

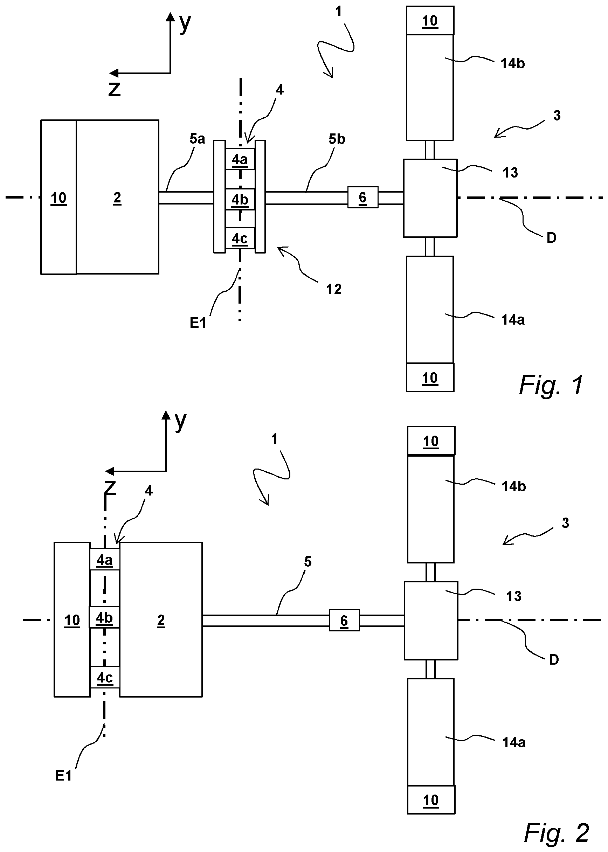

**Fig. 1** zeigt ein erstes Ausführungsbeispiel eines Antriebsstrangprüfstands 1, auf welchem zusätzlich zu Kalibrations- oder Applikationstests eine Detektion von Unwuchten und/oder Fehlausrichtungen möglich ist. Insbesondere kann die Unwucht und/oder die Fehlausrichtung im Prüfstandsbetrieb detektiert werden.

Der Antriebsstrangprüfstand 1 weist unter anderem Belastungsmaschinen bzw. Dynos 14a, 14b auf, welche mit einem Abtrieb eines Antriebsstrangs, wie in Fig. 1 gezeigt, drehfest verbindbar sind.

Des Weiteren weist der Antriebsstrangprüfstand 1 vorzugsweise einen Inkrementalgeber 6 auf, welcher eingerichtet ist, einen Drehwinkel des Wellenstrangs 5a, 5b zu messen. Die Funktion eines Inkrementalgebers 6 ist aus dem Stand der Technik bekannt, insbesondere kann dieser den Drehwinkel des Wellenstrangs 5a, 5b oder eine Drehwinkeländerung und/oder -richtung photoelektrisch, magnetisch und/oder mit Schleifkontakten bestimmen.

Darüber hinaus verfügt der Antriebsstrang 1 vorzugsweise über einen piezoelektrischen Kraftsensor 4, welcher vorzugsweise wiederum mehrere piezoelektrische Messelemente, in Fig. 1 drei piezoelektrische Messelemente 4a, 4b, 4c, aufweist. Die piezoelektrischen Messelemente sind in dem Ausführungsbeispiel nach Fig. 1 an einem Messflansch 12 angeordnet, welcher Teil des Antriebsprüfstands 1 oder des Antriebsstrangs 3 sein kann.

Der Messflansch verbindet einen ersten Wellenabschnitt 5a mit einem zweiten Wellenabschnitt 5b des Wellenstrangs 3. Der Wellenstrang 5a, 5b rotiert um eine Drehachse D, welche in Fig. 1 strichpunktiert angegeben ist.

Die Antriebsmaschine 2 kann sowohl ein Bestandteil des Antriebsstrangprüfstands 1 oder des Antriebsstrangs 3 sein, je nachdem, welche Komponenten eines Antriebsstrangs 3 auf dem Antriebsstrangprüfstand 1 getestet werden sollen.

In dem in Fig. 1 gezeigten Ausführungsbeispiel weist der Antriebsstrang 3 die Antriebsmaschine 2, den Wellenstrang 5a, 5b, ein Differential 13 sowie Achsabschnitte (kein Bezugszeichen) auf. Von der Antriebsmaschine 2 kann ein Leistungsfluss über den ersten Wellenabschnitt 5a, den Messflansch 12, den ersten piezoelektrischen Kraftsensor, das Differential 13 und die Achsabschnitte an die Belastungsmaschinen 14a, 14b übertragen werden.

Der Prüfstand 1 weist des Weiteren eine Abstützvorrichtung 10 auf, auf welcher der Antriebsprüfstand als Ganzes, einzelne Elemente des Antriebsstrangprüfstands 1 und/oder auch der Antriebsstrang 3 gelagert sind. Die Abstützvorrichtung 10 kann hierbei mechanische Strukturen aufweisen, um die einzelnen Elemente beispielsweise auf dem Boden einer Prüfstandshalle zu lagern. Weiter vorzugsweise kann die Abstützvorrichtung 10 eine Grundplatte aufweisen oder als solche ausgebildet sein.

In dem in Fig. 1 gezeigten Ausführungsbeispiel sind wenigstens die Antriebsmaschine 2 und die Leistungsmaschinen 14a, 14b durch die Abstützvorrichtung 10 gelagert.

Durch den Leistungsfluss, welcher vorzugsweise von der Antriebsmaschine 2 erzeugt wird, wird ein Kraftfluss verursacht, welcher sich in dem in Fig. 1 gezeigten Ausführungsbeispiel von der Abstützvorrichtung 10 über die Antriebsmaschine 2 und den Antriebsstrang 3, die Belastungsmaschinen 14a, 14b wiederum bis zu der Abstützvorrichtung 10 erstreckt. Die Abstützvorrichtung 10 stellt hierbei jeweils die Reaktionskräfte zum Abstützen der Antriebsmaschine 2 und der Belastungsmaschine 14a, 14b bereit.

Die Messelemente 4a, 4b, 4c sind vorzugsweise in der Weise eingerichtet und ausgebildet, um Kräfte in der Ebene E1, das heißt einer Ebene parallel zu der XY-Ebene des eingezeichneten Bezugssystems zu messen. Der erste Kraftsensor 4 weist vorzugsweise Piezoelemente 4a, 4b, 4c auf, welche den piezoelektrischen Schereffekt ausnutzen. In dem gezeigten Ausführungsbeispiel werden Kräfte bzw. Drehmomente an dem Messflansch 12 über Stirnflächen der Messelemente 4a, 4b, 4c in die Piezoelemente 4a, 4b, 4c eingeleitet. Die Stirnflächen der Piezoelemente 4a, 4b, 4c sind hierbei vorzugsweise reibschlüssig mit einer Oberfläche des Messflansches 12 verbunden.

Liegt eine Kraft in X-Richtung und/oder eine Kraft in Y-Richtung des Bezugssystems am Messflansch 12 an, so erzeugen die piezoelektrischen Messelemente 4a, 4b, 4c mittels des piezoelektrischen Schereffekts entsprechende Messsignale. Gleiches gilt, wenn ein in Z-Richtung wirkendes Drehmoment an dem Messflansch 12 anliegt.

Alternativ oder zusätzlich können die Messelemente 4a, 4b, 4c eine Kraftmessung senkrecht zu der ersten Ebene E1 durchführen. Hierfür nutzen die Messelemente 4a, 4b, 4c vorzugsweise den piezoelektrischen Longitudinaleffekt oder den piezoelektrischen Transversaleffekt aus. Werden sowohl Kräfte in der ersten Ebene E1 als auch normal dazu gemessen, so sind vorzugsweise sowohl Messelemente vorhanden, welche in Z-Richtung messen, als auch Messelemente, welche in X- oder XY-Ebene Kräfte messen können. Weiter vorzugsweise weist jedes der Messelemente 4a, 4b, 4c wenigstens zwei Piezoelemente auf, welche in Bezug auf den Kraftfluss in Reihe geschaltet sind, wobei ein erstes Piezoelement den piezoelektrischen Schereffekt und ein zweites Piezoelement den piezoelektrischen Transversal- oder Longitudinaleffekt ausnutzt.

**Fig. 2** zeigt ein zweites Ausführungsbeispiel eines Prüfstands 1, mittels welchem im Prüfstandsbetrieb eine Unwucht und/oder eine Fehlausrichtung eines Wellenstrangs detektiert werden kann.

Der Prüfstand 1 des zweiten Ausführungsbeispiels von Fig. 2 unterscheidet sich von dem ersten Ausführungsbeispiel von Fig. 1 im Wesentlichen dadurch, dass der erste Kraftsensor 4 nicht im Leistungsfluss zwischen der Antriebsmaschine 2 und den Belastungsmaschinen 14a, 14b angeordnet ist, sondern zwischen der Abstützvorrichtung 10 und der Antriebsmaschine 2.

Der erste Kraftsensor 4 misst durch diese Anordnung die Reaktionskraft, welche durch die Abstützvorrichtung 10 auf die Antriebsmaschine 2 ausübt, wenn zwischen Wellenstrang 5 und der Antriebsmaschine 2 ein Drehmoment anliegt.

Der Kraftsensor 4 kann hierbei vorzugsweise, wie in Fig. 2 dargestellt, in axialer Richtung der Drehachse D gelagert werden. Genauso kann die Antriebsmaschine 2 aber auch in der Draufsicht nach Fig. 2 seitlich durch den Kraftsensor 4 gelagert werden oder nach unten oder nach oben hin. Je nachdem, wie die piezoelektrischen Messelemente 4a, 4b, 4c an der Antriebsmaschine 2 angreifen, kommen dann Elemente mit piezoelektrischen Schereffekt, piezoelektrischen Longitudinal- oder Quereffekt oder, wie bereits in Fig. 1 erläutert, mit zwei verschiedenen Effekten zum Einsatz.

Auch in dem Ausführungsbeispiel nach Fig. 2 werden Kräfte vorzugsweise in der Ebene E1 und/oder senkrecht zu der Ebene E1 gemessen.

Auch ist es möglich, das Ausführungsbeispiel nach Fig. 1 mit dem zweiten Ausführungsbeispiel nach Fig. 2 zu kombinieren: So könnte beispielsweise auch das zweite Ausführungsbeispiel ein Messflansch 12 aufweisen, an welchem ein weiterer piezoelektrischer Kraftsensor angeordnet ist. Dieser zweite piezoelektrische Kraftsensor könnte dann eine zweite Ebene zum Messen von Kräften und/oder Momenten definieren.

Des Weiteren könnten weitere piezoelektrische Kraftsensoren zur Messung der Reaktionskräfte an den Belastungsmaschinen 14a, 14b vorhanden sein und auch diese weiteren piezoelektrischen Kraftsensoren könnten vorzugsweise die jeweilige Belastungsmaschine 14a, 14b gegenüber der Abstützvorrichtung, insbesondere gegenüber einer Grund- oder Bodenplatte lagern, so dass auch hier die Reaktionskräfte zwischen den Belastungsmaschinen 14a, 14b und der Abstützvorrichtung 10 gemessen werden könnten.

Die Messung von Reaktionskräften nach Fig. 2 hat gegenüber der direkten Messung von Kräften in dem Wellenstrang 5 den Vorteil, dass der jeweilige Kraftsensor 4 keinen Einfluss auf das Trägheitsmoment und die Wucht des Wellenstrangs hat.

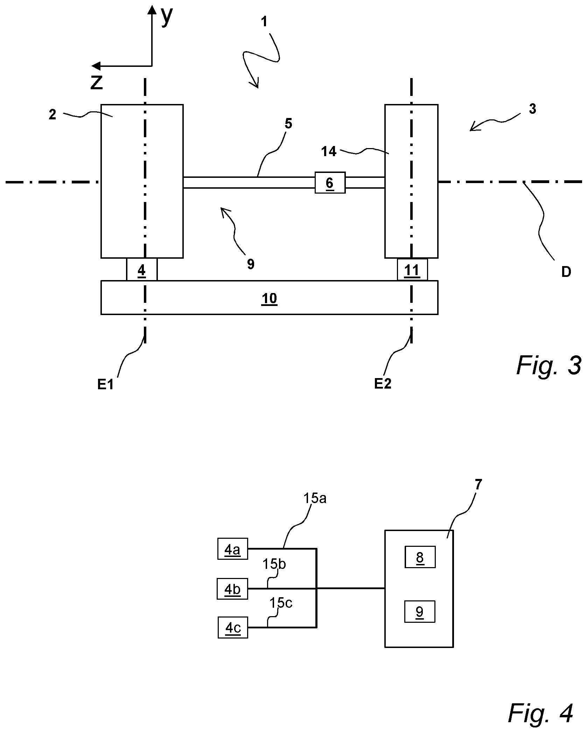

Ein drittes Ausführungsbeispiel eines Antriebsstrangprüfstands mittels welchem eine Unwucht und/oder eine Fehlausrichtung eines Wellenstrangs detektiert werden kann, ist in **Fig. 3** gezeigt.

Zur Vereinfachung der Darstellung weist der Antriebsstrang 3 lediglich einen Wellenstrang 5 sowie gegebenenfalls eine Antriebsmaschine 2 auf. Genauso wie in dem Ausführungsbeispielen nach den Fig. 1 und 2 kann aber auch dieser Antriebsstrang weitere Elemente aufweisen, insbesondere ein Getriebe bzw. Differenzial, Achsabschnitte, etc. Im Unterschied zu den Ausführungsbeispielen nach Fig. 1 und 2 weist das dritte Ausführungsbeispiel einen ersten Kraftsensor 4 und einen zweiten Kraftsensor 11 auf, deren Messelement nur eine Kraft in der jeweiligen Ebene E1 bzw. E2 messen kann.

Wird Fig. 3 als Draufsicht von oben gewertet, so wird mittels der Kraftsensoren 4, 11 eine Kraft in horizontaler Richtung in der Messebene E1 bzw. E2 gemessen. Wird Fig. 3 als eine Draufsicht von der Seite gewertet, so wird mittels der Kraftsensoren 4, 11 eine Kraft in vertikaler Richtung gemessen.

Wie weiter unten erläutert wird, lässt sich einer solchen Anordnung in Verbindung mit der Winkelmessung des Inkrementalgebers 6 eine statische und/oder eine dynamische Unwucht detektieren, da diese umläuft und mithin periodisch in jeder radial zur Rotationsachse verlaufenden Raumrichtung gemessen werden kann. Eine Fehlausrichtung lässt sich dagegen nicht detektieren, wenn diese eine Kraft / Biegemoment in der ZX-Ebene, das heißt senkrecht zur Messrichtung der beiden Kraftsensoren 4, 11, verursacht.

Auch in diesem Ausführungsbeispiel könnte jedoch vorgesehen sein, dass der jeweilige Kraftsensor 4, 11 zwei in Bezug auf den Kraftfluss in Reihe geschaltete Elemente aufweist, so dass zwei verschiedene Messrichtungen, insbesondere zwei zueinander orthogonale Messrichtungen, möglich sind. Insbesondere könnten diese Messrichtungen in Y- und X-Richtung ausgerichtet sein. Durch ein drittes Piezoelement in den Messelementen der Kraftsensoren 4, 11 könnte auch eine Kraft in Z-Richtung gemessen werden.

**Figur 4** zeigt ein Detail eines Antriebsstrangprüfstands 1.

Der piezoelektrische Kraftsensor 4 ist hierbei mittels einer Signalleitung mit einer Signalverarbeitungseinrichtung 7 verbunden. Vorzugsweise können die einzelnen Piezoelemente, wie in Fig. 4 dargestellt, mittels einzelner Signalleitungen 15a, 15b, 15c mit der Signalverarbeitungseinrichtung 7 verbunden sein.

Die Signalverarbeitungseinrichtung 7 weist darüber hinaus vorzugsweise Mittel 8 zum Detektieren einer Unwucht des Wellenstrangs auf. Zum Detektieren der Unwucht wird vorzugsweise der Messwertverlauf der ersten Kraftmessung und/oder ein Messwertverlauf der zweiten Kraftmessung mittels des zweiten piezoelektrischen Kraftsensors 11 herangezogen. Des Weiteren wird vorzugsweise ein im Messwertverlauf des durch den Inkrementalgeber 6 gemessenen Drehwinkels des Wellenstrangs 5 zum Detektieren der Unwucht und/oder der Fehlausrichtung herangezogen.

Weiter vorzugsweise weist die Signalverarbeitungseinrichtung 7 Mittel 9 zum Detektieren einer Fehlausrichtung des Wellenstrangs auf. Eine solche Fehlausrichtung kann insbesondere auf der Grundlage eines Messwertverlaufs der ersten Kraftmessung durch den ersten piezoelektrischen Kraftsensor 4 detektiert werden. Im Gegensatz zu einer Unwucht, die mit einer Drehfrequenz des Wellenstrangs 5 im Bezugssystem umläuft, bleibt eine Kraft oder ein Drehmoment, welche durch eine Fehlausrichtung bewirkt werden, ortsfest in Bezug auf ein raumfestes Bezugssystem.

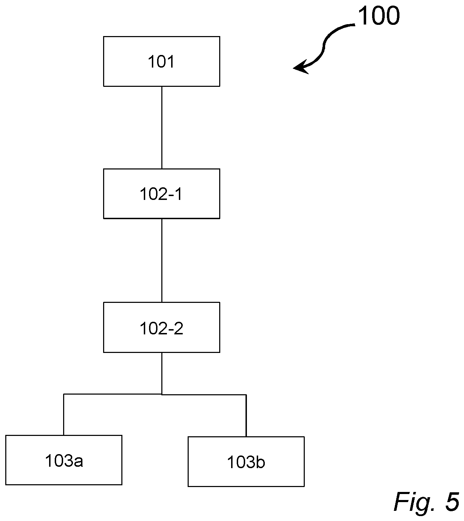

**Figur 5** zeigt ein Ausführungsbeispiel eines Verfahrens zur Detektion einer Unwucht und/oder einer Fehlausrichtung, welches auf den vorher beschriebenen Ausführungsbeispielen eines Antriebsstrangs 1 der Fig. 1 bis 4 ausgeführt werden kann. Eine Leistungsübertragung wird zwischen einer Antriebsmaschine 2 und Belastungsmaschinen 14a, 14b hergestellt. Entweder treibt hierbei die Antriebsmaschine 2 die Belastungsmaschinen 14a, 14b über den Wellenstrang 5 an oder umgekehrt. Erfindungsgemäß ist die Belastungsmaschine 14a, 14b dazu eingerichtet, die Antriebsmaschine 2 anzutreiben.

Während diese Leistungsübertragung anhält, wird mittels des ersten Kraftsensors eine erste Kraftmessung in der ersten Ebene E1 oder senkrecht zu der ersten Ebene E1 durchgeführt 102-1. In welche Richtung die Kraftmessung vorgenommen wird, hängt dabei von den Kräften und Momenten ab, welche gemessen werde sollen. Die jeweilige Ebene, in welcher die Kraftmessung erfolgt bzw. in Bezug auf welche die Kraftmessung erfolgt, muss jedoch nicht normal zu der Drehachse D sein. Ist dies der Fall, so wird für die verschiedenen Berechnungen immer nur jener Anteil der Kraftmessung berücksichtigt, welcher parallel zu der Drehachse D oder orthogonal zu der Drehachse D ausgerichtet ist.

Soll eine dynamische Unwucht detektiert werden, so wird vorzugsweise eine Messung in einer zweiten Ebene E2, welche von der ersten Eben E1 verschieden ist, vorgenommen, wie beispielsweise in Fig. 3 in Bezug auf das dritte Ausführungsbeispiel des Antriebsstrangprüfstands 1 gezeigt 102-2.

Danach wird der Messwertverlauf der ersten Kraftmessung und/oder der zweiten Kraftmessung sowie vorzugsweise eine der Drehwinkelbestimmung für den Wellenstrang analysiert, um eine statische Unwucht und/oder eine dynamische Unwucht detektieren zu können 103a. Zusätzlich oder alternativ werden die Messwertverläufe analysiert, um eine Fehlausrichtung des Wellenstrangs detektieren zu können 103b.

Vorzugsweise werden in einem weiteren Arbeitsschritt Ausgleichsmassen an dem Antriebsstrang 3, insbesondere direkt an dem Wellenstrang 5, 5a, 5b, platziert, um die Hauptträgheitsachse des Antriebstrangs 3 wieder mit der Drehachse D in Deckung zu bringen, den Schwerpunkt des Antriebsstrangs 3 auf die Drehachse D zu verschieben und oder die Hauptträgheitsachse parallel, insbesondere koaxial, zur Drehachse D auszurichten.

Eine statische Unwucht kann in Arbeitsschritt 103a wie folgt detektiert werden:
Durch die zweidimensionale Kraftmessung in einer Auflagerstelle des Wellenstrangs 5, 5a, 5b oder unmittelbar am Wellenstrang 5, 5a, 5b, insbesondere am Antrieb, am Abtrieb oder an einer Zwischenlagerung, kann eine radiale Kraftkomponente $F_r(t)$ der folgenden Gleichung bestimmt werden:

$$F_r(t) = \sqrt{F_x(t) + F_y(t)}$$

Durch Reduktion auf den ersten harmonischen Anteil von $F_r(t)$, zum Beispiel mittels eines schmalbandigen Bandpasses mit der Übertragungsfunktion H(s) mit der Mittenfrequenz $f_0 = f_{rotation}$ wird die radiale Kraftkomponente wie folgt isoliert:

$$F_U(t) = H(s) \cdot F_r(t)$$

Die umlaufende radiale Kraftkomponente entspricht der umlaufenden Unwuchtkraft $F_u$, und gibt Auskunft über die harmonische Erregung von Schwingungen, welche mechanische Schäden im Antriebsstrang 1 und unerwünschte Lagelasten bewirken können. Vorzugsweise Mittelungen über hinreichend viele Zeitschritte $t_n$ ergibt sich ein konstanter Betragswert der Unwucht wie folgt:

$$\overline{F_U} = \frac{1}{n} \sum_{i=0}^{n} F_U(t_i)$$

Mittels Platzierens von Ausgleichsmassen in oder nahe der Ebenen E1, E2 der Kraftmessung kann die statische Unwucht kompensiert werden. Die Ausgleichsmasse (Masse des Gleichgewichts) $m_a$ berechnet sich aus der Unwucht-

kraft $F_u$, der Radialposition $r_A$, in welcher die Ausgleichsmasse $m_a$ platziert werden soll, und der Winkelschwenkgeschwindigkeit $\omega_{mess}$ des Wellenstrangs 5, 5a, 5b. Für die Ausgleichskraft $F_A$ gilt wie folgt:

$$F_A = \overline{F_U} = m_A \cdot r_A \cdot \omega_{mess}^2$$

Durch das Platzieren der Ausgleichsmasse $m_a$ fällt der Schwerpunkt des Wellenstrangs mit der Rotationsachse zusammen und die Summation aller Auflagerkräfte ergibt Null.

Alternativ oder zusätzlich zum Platzieren einer Ausgleichsmasse $m_a$ kann eine Unwucht auch durch Entfernen von Masse an dem Antriebsstrang 3 bzw. im Wellenstrang 5, 5a, 5b ausgeglichen werden.

In Bezug auf eine dynamische Unwucht werden die Ausgleichsmassen entsprechend zu dem Verfahren zur Bestimmung einer statischen Unwucht bestimmt. Jedoch müssen Ausgleichsmassen in wenigstens zwei unterschiedlichen Ebenen platziert werden. Die Massen ergeben sich hierbei u.a. aus dem axialen Abstand der Ausgleichsmessebene E1, E2. Wenn der erste Kraftsensor 4, sowohl Kräfte in der Ebene E1 als auch Kräfte senkrecht zu der Ebene E1 zeitgleich erfassen kann, genügt für das Detektieren einer dynamischen Unwucht eine einzelne Messebene E1.

Die Kraftkomponenten $F_x(t)$ und $F_y(t)$ zur Bestimmung von Unwuchten und die Kraftkomponente $F_z(t)$ sowie die Momentenkomponenten $M_x(t)$ und $M_y(t)$ zur Bestimmung von dynamischen Unwuchten und einer Fehlaurichtung können in an sich bekannter Weise mittels der gezielten Anordnung von Vorzugsrichtungen der einzelnen Messelemente 4a, 4b, 4c bzw. deren Piezoelemente erreicht werden.

Auch andere Verfahren zur Bestimmung dieser Parameter können zum Einsatz kommen. Beispielsweise eine Zerlegung, insbesondere orthogonale Zerlegung, der Messsignale der einzelnen Messelemente 4a, 4b, 4c oder der aus den Messsignalen abgeleiteten, das heißt gemessenen Kräfte $F_1$, .., $F_i$.

Hierbei sind beispielsweise die zu bestimmenden Parameter $M_z$, $F_X$, $F_Y$ die Lösung eines Gleichungssystems, wobei für jedes Messsignal eine Gleichung wie folgt gilt:

$$S1 = a_{11} \cdot M_z + a_{12} \cdot Fx + a_{13} \cdot Fy$$

$$S2 = a_{21} \cdot M_z + a_{22} \cdot Fx + a_{23} \cdot Fy$$

$$S3 = a_{31} \cdot M_z + a_{32} \cdot Fx + a_{33} \cdot Fy$$

.

$$SN = a_{N1} \cdot M_z \ldots$$

S1, S2, ...Si, ..., SN sind hierbei die Messsignale der einzelnen Messelemente 4a, 4b, 4c, ...2, N. Jeder Koeffizient a hängt von mehreren Faktoren ab, wie beispielsweise der jeweiligen Position des Messelements 4a, 4b, 4c, ...4i, 4N und der Orientierung der jeweiligen Vorzugsrichtung im Bezugssystem, einer Empfindlichkeit des jeweiligen Messelements 4a, 4b, 4c,..., 4i,...,N und einem möglichen Signalverlust durch einen Kraftnebenschluss über ein Befestigungsmittel.

Um ein solches Gleichungssystem für das Drehmoment $M_z$, eine erste Querkraftkomponente $F_x$ und eine zweite Querkraftkomponente $F_y$ aufzulösen, werden Messsignale von wenigstens drei Messelemente 4a, 4b, 4c, deren Vorzugsrichtungen in der Weise ausgerichtet sind, dass sie in einer einzigen Ebene liegen, benötigt. Darüber hinaus dürfen wenigstens zwei der Vorzugsrichtungen weder parallel noch antiparallel ausgerichtet sein.

Für diesen beschriebenen allgemeinen Fall mit N = 3, d. h. mit drei Messelementen 4a, 4b, 4c ist die Lösung des oben dargestellten Gleichungssystems eindeutig. Werden weitere Messelemente zu dem Messsystem 1 hinzugefügt, so ist das Gleichungssystem mit drei zu bestimmenden Parametern $M_z$, $F_x$, $F_y$ überbestimmt, die Messgenauigkeit kann jedoch nochmals verbessert werden.

Im Fall von N = 4 können vier verschiedene Gleichungssysteme F (S1, S2, S3), F (S1, S2, S4), F (S1, S3, S4), F (S2, S3, S4) aufgestellt werden. Die für die einzelnen zu bestimmenden Parameter $M_z$, $F_x$, $F_y$ bestimmten Werte können dann addiert und gemittelt werden, d. h. in dem Fall von vier Messelementen 4a, 4b, 4c, ..., 4i, ...,4N durch vier dividiert werden. In ähnlicher Weise kann ein überbestimmtes Gleichungssystem F (S1, S2 ..., SN) aufgestellt werden, welches mittels einer Minimierungsaufgabe gelöst wird.

Ist eine allgemeine Lösung für das Gleichungssystem gefunden, kann die Berechnung der zu bestimmenden Parameter $M_z$, $F_x$, $F_y$ auf eine Matrixmultiplikation reduziert werden. Diese hat drei Zeilen und so viele Spalten, wie Messsignale S1, S2, S3, ... SN zur Verfügung stehen. Die Matrixelemente bzw. Koeffizienten bilden die jeweiligen Beiträge der einzelnen Sensoren zu den zu bestimmenden Parametern $M_z$, $F_x$, $F_y$ ab.

$$\begin{pmatrix} Fx \\ Fy \\ MB \end{pmatrix} = K \begin{pmatrix} c11 & c12 & c13 & ...c1N \\ c21 & c22 & c23 & ...c2N \\ c31 & c32 & c33 & ...c3N \end{pmatrix} \begin{pmatrix} s1 \\ s2 \\ s3 \\ ...sN \end{pmatrix}$$

Für die Zerlegung der Messsignale S1, S2, ...Si, ..., SN in Komponenten, welche zu den jeweiligen zu bestimmenden Parametern $M_z$, $F_x$, $F_y$ beitragen, ist es notwendig, dass die Lage der Messelemente 4a, 4b, 4c, ..., 4i, ...,4N und die Orientierung der Vorzugsrichtungen bekannt ist.

Die geometrischen Parameter können entweder aus einer Konstruktionszeichnung des Antriebsstrangprüfstands 1 und aus der Kenntnis der Vorzugsrichtungen der Messelemente 4a, 4b, 4c, ..., 2i, ..., 2N bestimmt werden.

Die Orientierung der Vorzugsrichtungen der Messelemente 4a, 4b, 4c, ..., 4i, ...,4N kann jedoch auch durch Ausmessen der Vorzugsrichtungen mittels einer Kalibrierungsmessung bestimmt werden. Vorzugsweise wird der Kraftsensor 4, 11 hierfür zwischen zwei ebene Platten eingespannt. In einem nächsten Schritt werden externe Querkräfte mit bekannter Richtung aufgebracht. Aus der Größe der einzelnen Messsignale S1, S2,...Si,..., SN im Verhältnis zum Betrag und zu der Richtung der eingeleiteten Querkräfte kann die Vorzugsrichtung der Messelemente 4a, 4b, 4c,..., 4i,...,4N in der Ebene, welche durch die Vorzugsrichtung der Messelemente 4a, 4b, 4c,..., 4i,...,4N aufgespannt wird, bestimmt werden.

In ähnlicher Weise kann durch das Aufbringen eines definierten Drehmoments $M_z$ und das Messen der einzelnen Messsignale S1, S2,...Si,..., SN ein Abstand der Messelemente 4a, 4b, 4c,..., 4i,...,4N von der Drehachse D bestimmt werden, wenn die Vorzugsrichtungen der einzelnen Messelemente 4a, 4b, 4c,..., 4i,...,4N bekannt sind.

Bei den vorher beschriebenen Ausführungsbeispielen handelt es sich lediglich um Beispiele, die den Schutzbereich und die Anwendung und den Aufbau in keiner Weise einschränken sollen. Vielmehr wird dem Fachmann durch die vorausgehende Beschreibung ein Leitfaden für die Umsetzung mindestens eines Ausführungsbeispiels gegeben, wobei diverse Änderungen, insbesondere im Hinblick auf die Funktion und die Anordnung der beschriebenen Bestandteile vorgenommen werden können. Insbesondere können einzelne Ausführungsbeispiele miteinander kombiniert werden. Die Patentansprüche geben den Gegenstand an, für den Schutz begehrt wird.

## Bezugszeichenliste

| | |
|---|---|
| 1 | Antriebsstrangprüfstand |
| 2 | Antriebsmaschine |
| 3 | Antriebsstrang |
| 4 | Erster piezoelektrischer Kraftsensor |
| 4a, 4b, 4c | Piezoelektrische Messelemente |
| 5, 5a, 5b | Wellenstrang |
| 6 | Inkrementalgeber |
| 7 | Signalverarbeitungseinrichtung |
| 8 | Mittel zum Detektieren einer Unwucht |
| 9 | Mittel zum Detektieren einer Fehlausrichtung |
| 10 | Abstützvorrichtung |
| 11 | Zweiter piezoelektrischer Kraftsensor |
| 12 | Messflansch |
| 13 | Differential/Getriebe |
| 14a, 14b | Belastungsmaschine |
| 15a, 15b, 15c | Signalleitungen |

## Patentansprüche

**1.** Antriebsstrangprüfstand (1) aufweisend:

eine Belastungsmaschine (14a, 14b), welche ein Dyno ist und mit einem zu testenden Antriebsstrang (3) verbindbar ist;
ein erster piezoelektrischer Kraftsensor (4), welcher in einem Kraftfluss in Bezug auf den zu testenden Antriebsstrang (3), welcher durch eine Leistungsübertragung zwischen der Belastungsmaschine (14a, 14b) des Prüfstands (1) und einer Antriebsmaschine (2) des Antriebsstrangs (3) oder des Prüfstands (1) verursacht wird, angeordnet ist und eingerichtet ist, um eine erste Kraftmessung in einer ersten Ebene (E1) und/oder normal zu der ersten Ebene (E1), welche von einer Drehachse (D) eines Wellenstrangs (5; 5a, 5b) des Antriebsstrangs (3) geschnitten wird und vorzugsweise wenigstens im Wesentlichen normal zu der Drehachse (D) ist, im Prüfstandsbetrieb durchzuführen;
einen Inkrementalgeber (6), eingerichtet, um einen Drehwinkel für den Wellenstrang (5; 5a, 5b) zu bestimmen;
eine Signalverarbeitungseinrichtung (7) mit

- Mitteln (8) zum Detektieren einer Unwucht des Wellenstrangs (5; 5a, 5b) auf der Grundlage eines Messwertverlaufs der ersten Kraftmessung und einem dem Messwertverlauf zugeordneten Wertverlauf einer Drehwinkelbestimmung für den Wellenstrang (5; 5a, 5b); und/oder
- Mitteln (9) zum Detektieren einer Fehlausrichtung des Wellenstrangs (5; 5a, 5b) auf der Grundlage des Messwertverlaufs der ersten Kraftmessung

wobei die Belastungsmaschine (14a, 14b) eingerichtet ist, die Antriebsmaschine (2) anzutreiben.

2. Antriebsstrangprüfstand (1) nach Anspruch 1 mit einem zweiten piezoelektrischen Kraftsensor (11), welcher ebenfalls in dem Kraftfluss in Bezug auf den zu testenden Antriebsstrang (3) angeordnet ist und eingerichtet ist, eine zweite Kraftmessung in einer zweiten Ebene (E2), welche von der ersten Ebene (E1) verschieden ist, aber ebenfalls von der Drehachse (D) eines Wellenstrangs (5; 5a, 5b) des Antriebsstrangs (3) geschnitten wird und vorzugsweise wenigstens im Wesentlichen normal zu der Drehachse (D) ist, durchzuführen, wobei die Mittel (8) eine Unwucht des Wellenstrangs (5; 5a, 5b) in Bezug auf dessen Schwerpunkt zusätzlich auf der Grundlage eines Messwertverlaufs der zweiten Kraftmessung bestimmen.

3. Antriebsstrangprüfstand (1) nach Anspruch 1 oder 2 mit einer Abstützvorrichtung (10) zum Abstützen der Belastungsmaschine (14a, 14b) und/oder einer Antriebsmaschine (2), wobei der erste (4) und/oder der zweite piezoelektrische Kraftsensor (11), in der Weise eingerichtet und angeordnet ist, um eine Reaktionskraft zwischen der Belastungsmaschine (14a, 14b) und einer Abstützvorrichtung (10) und/oder der Antriebsmaschine (2) und einer Abstützvorrichtung (10) zu messen.

4. Antriebsstrangprüfstand (1) nach einem der Ansprüche 1 bis 3, wobei der erste (4) und/oder ein zweiter piezoelektrischer Kraftsensor (11) eine rotierende Masse des Wellenstrangs (5, 5a; 5b) nicht verändert/verändern.

5. Antriebsstrangprüfstand (1) nach einem der Ansprüche 1 bis 4, wobei der erste (4) und/oder ein zweiter piezoelektrische Kraftsensor (11) ein Mehrkomponenten-Kraftsensor mit mehreren piezoelektrischen Messelementen (4a, 4b, 4c) ist.

6. Antriebsstrangprüfstand (1) nach Anspruch 5 in Verbindung mit einem der Ansprücfie 1 oder 2, wobei die piezoelektrischen Messelemente (4a, 4b, 4c) in der Weise zwischen einem ersten Teil des Wellenstrangs (5a) und einem zweiten Teil des Wellenstrangs (5b) in der Weise angeordnet sind, dass mittels der piezoelektrischen Messelemente (4a, 4b, 4c) eine Kraft, insbesondere eine Scherkraft und/oder eine Druckkraft, zwischen dem ersten Teil (5a) und dem zweiten Teil (5b) messbar ist.

7. Antriebsstrangprüfstand (1) nach einem der Ansprüche 1 bis 6, aufweisend Mittel zum Anpassen einer Masse des Wellenstrangs (5, 5a, 5b) auf Basis der detektierten Unwucht und/oder Fehlausrichtung.

**Claims**

1. A drivetrain test bench (1) comprising:

a load unit (14a, 14b), which is a dyno and which is connectable to a drivetrain (3) to be tested;
a first piezoelectric force sensor (4) arranged in a flow of force relative to the drivetrain (3) to be tested which is generated by a transmission of power between the load unit (14a, 14b) of the test bench (1) and a drive unit (2) of the drivetrain (3) or of the test bench (1) and which is configured to realize a first force measurement in a first plane (E1) and/or perpendicular to the first plane (E1) which is intersected by a rotational axis (D) of a shaft assembly (5; 5a, 5b) of the drivetrain (3) and preferably at least substantially perpendicular to the rotational axis (D) during test bench operation;
an incremental encoder (6) configured to determine an angle of rotation for the shaft assembly (5; 5a, 5b);
a signal processing device (7) with

- means (8) for detecting an imbalance in the shaft assembly (5; 5a, 5b) on the basis of a measured value progression of the first force measurement and a value progression associated with the measured value progression of a rotational angle determination for the shaft assembly (5; 5a, 5b); and/or
- means (9) for detecting a misalignment of the shaft assembly (5; 5a, 5b) on the basis of the measured value progression of the first force measurement

wherein the load unit (14a, 14b) is configured to drive the drive unit (2).

2. The drivetrain test bench (1) according to claim 1 having a second piezoelectric force sensor (11) likewise arranged in the flow of force relative to the drivetrain (3) to be tested and configured to realize a second force measurement in a second plane (E2), which differs from the first plane (E1) yet is likewise intersected by the rotational axis (D) of a shaft assembly (5; 5a, 5b) of the drivetrain (3) and preferably at least substantially perpendicular to the rotational axis (D), wherein the means (8) additionally determine an imbalance of the shaft assembly (5; 5a, 5b) in relation to its center of mass on the basis of a measured value progression of the second force measurement.

3. The drivetrain test bench (1) according to claim 1 or 2 comprising a support apparatus (10) for supporting the load unit (14a, 14b) and/or a drive unit (2), wherein the first (4) and/or the second (11) piezoelectric force sensor is/are configured and arranged so as to measure a reactive force between the load unit (14a, 14b) and a support apparatus (10) and/or the drive unit (2) and a support apparatus (10).

4. The drivetrain test bench (1) according to one of claims 1 to 3, wherein the first (4) and/or a second piezoelectric force sensor (11) does or respectively do not change a rotating mass of the shaft assembly (5, 5a; 5b).

5. The drivetrain test bench (1) according to one of claims 1 to 4, wherein the first (4) and/or a second piezoelectric force sensor (11) is/are a multi-component force sensor having multiple piezoelectric measuring elements (4a, 4b, 4c).

6. The drivetrain test bench (1) according to claim 5 in combination with one of the claims 1 or 2, wherein the piezoelectric measuring elements (4a, 4b, 4c) are arranged between a first section of the shaft assembly (5a) and a second section of the shaft assembly (5b) such that by means of the piezoelectric measuring elements (4a, 4b, 4c) a force, in particular a shear force and/or a compressive force, between the first section (5a) and the second section (5b) is measurable.

7. The drivetrain test bench (1) according to one of claims 1 to 6 comprising means for adjusting a mass of the shaft assembly (5, 5a, 5b) on the basis of the detected imbalance and/or misalignment.

**Revendications**

1. Banc d'essai de la chaîne cinématique (1) présentant :

une machine de charge (14a, 14b), qui est un dynamo et qui peut être reliée à une chaîne cinématique (3) à tester ; un premier capteur de force piézoélectrique (4), qui est disposé dans un flux de force par rapport à la chaîne cinématique (3) à tester, qui est provoqué par une transmission de puissance entre la machine de charge (14a, 14b) du banc d'essai (1) et une machine d'entraînement (2) de la chaîne cinématique (3) ou du banc d'essai (1), qui est mis au point pour effectuer lors du fonctionnement du banc d'essai une première mesure de force dans un premier plan (E1) et/ou de manière normale par rapport au premier plan (E1), lequel est sectionné par un axe de rotation (D) d'une ligne d'arbres (5 ; 5a, 5b) de la chaîne cinématique (3) et qui est de préférence au moins sensiblement normal par rapport à l'axe de rotation (D) ; un codeur incrémental (6) mis au point pour déterminer un angle de rotation pour la ligne d'arbres (5 ; 5a, 5b) ; un système de traitement de signaux (7) avec

- des moyens (8) de détection d'un déséquilibre de la ligne d'arbres (5 ; 5a, 5b) sur la base d'une courbe de valeurs de mesure de la première mesure de force et d'une courbe de valeurs de mesure, associée à la courbe de valeurs de mesure, d'une détermination d'angle de rotation pour la ligne d'arbres (5 ; 5a, 5b) ; et/ou
- des moyens (9) pour détecter un désalignement de la ligne d'arbres (5 ; 5a, 5b) sur la base de la courbe de valeurs de mesure de la première mesure de force

dans lequel la machine de charge (14a, 14b) est mise au point pour entraîner la machine d'entraînement (2).

**2.** Banc d'essai de chaîne cinématique (1) selon la revendication 1 avec un deuxième capteur de force piézoélectrique (11), qui est également disposé dans le flux de force par rapport à la chaîne cinématique (3) à tester et est mis au point pour effectuer une deuxième mesure de force dans un deuxième plan (E2), qui est différent du premier plan (E1), mais est également sectionné par l'axe de rotation (D) d'une ligne d'arbres (5 ; 5a, 5b) de la chaîne cinématique (3) et est de préférence au moins sensiblement normal par rapport à l'axe de rotation (D), dans lequel les moyens (8) déterminent un déséquilibre de la ligne d'arbres (5 ; 5a, 5b) par rapport à son centre de gravité en supplément sur la base d'une courbe de valeurs de mesure de la deuxième mesure de force.

**3.** Banc d'essai de chaîne cinématique (1) selon la revendication 1 ou 2 avec un dispositif d'appui (10) pour soutenir la machine de charge (14a, 14b) et/ou une machine d'entraînement (2), dans lequel le premier (4) et/ou le deuxième capteur de force piézoélectrique (11) sont mis au point et disposés de manière à mesurer une force de réaction entre la machine de charge (14a, 14b) et un dispositif d'appui (10) et/ou la machine d'entraînement (2) et un dispositif d'appui (10.

**4.** Banc d'essai de chaîne cinématique (1) selon l'une quelconque des revendications 1 à 3, dans lequel le premier (4) et/ou le deuxième capteur de force piézoélectrique (11) ne modifient pas une masse tournante de la ligne d'arbres (5, 5a; 5b).

**5.** Banc d'essai de chaîne cinématique (1) selon l'une quelconque des revendications 1 à 4, dans lequel le premier (4) et/ou un deuxième capteur de force piézoélectrique (11) est un capteur de force multicomposant avec plusieurs éléments de mesure piézoélectriques (4a, 4b, 4c).

**6.** Banc d'essai de chaîne cinématique (1) selon la revendication 5 en lien avec l'une des revendications 1 ou 2, dans lequel les éléments de mesure piézoélectriques (4a, 4b, 4c) sont disposés entre une première partie de la ligne d'arbres (5a) et une deuxième partie de la ligne d'arbres (5b) de telle manière que, au moyen des éléments de mesure piézoélectriques (4a, 4b, 4c), une force, en particulier une force de cisaillement et/ou une force de pression, entre la première partie (5a) et la deuxième partie (5b) peuvent être mesurées.

**7.** Banc d'essai de chaîne cinématique (1) selon l'une quelconque des revendications 1 à 6, présentant des moyens d'adaptation d'une masse de la ligne d'arbres (5, 5a, 5b) sur la base du déséquilibre et/ou du désalignement détectés.

Fig. 1

Fig. 2

Fig. 3

Fig. 4

100

101

102-1

102-2

103a     103b

*Fig. 5*

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- FR 2918453 A1

**In der Beschreibung aufgeführte Nicht-Patentliteratur**

- Rotordynamik. **LEHRBUCH**. Gasch / Nordmann / Pfützner. Springer Verlag, 1975

- Allgemeine Grundlagen, Meßverfahren und Richtlinien. **LEHRBUCH**. Auswuchttechnik. Springer, 1977, vol. 1